# EUROPÄISCHE PATENTANMELDUNG

(11) **EP 0 796 761 A2**
(43) Veröffentlichungstag der Anmeldung: **24.09.1997**
(21) Anmeldenummer: 97100940.2
(22) Anmeldetag: 22.01.1997
(51) Int. Cl.: B60Q 1/44

(54) **Steuerungsvorrichtung, insbesondere zur Fahrzeug-Bremslichtsteuerung**

(30) Priorität: 20.03.1996 DE 19610871
(71) Anmelder: DAIMLER-BENZ AKTIENGESELLSCHAFT, 70567 Stuttgart (DE)
(72) Erfinder: Dietz, Jürgen, 71384 Weinstadt (DE); Stähle, Armin, 71154 Nufringen (DE); Wörner, Stefan, 71384 Weinstadt (DE)

(57) **Zusammenfassung**

Die Erfindung bezieht sich auf eine Steuerungvorrichtung mit einem ansteuerbaren Element und einer Steuereinheit, die ein Ausgangssignal abgibt, das dann, wenn ein eingangsseitig anstehenes Steuerbefehlssignal auf einem aktivierenden Pegel liegt, kontinuierlich oder periodisch einen aktivierenden Pegel annimmt und dann, wenn das Steuerbefehlssignal auf einem deaktivierendem Pegel liegt oder ein Funktionsausfall der Steuereinheit vorliegt, kontinuierlich einen deaktivierenden Pegel annimmt.

Erfindungsgemäß beinhaltet die Steuerungvorrichtung eine Redundanzlogikeinheit, die das Steuerbefehlssignal mit dem Ausgangssignal der Steuereinheit dergestalt logisch zur Bildung des Ansteuersignals für das ansteuerbare Element verknüpft, daß dann, wenn das Ausgangssignal der Steuereinheit kontinuierlich auf seinem deaktivierenden Pegel liegt, das Ansteuersignal entsprechend dem Steuerbefehlssignal auf seinem aktivierenden bzw. deaktivierendem Pegel liegt, während ansonsten das Ansteuersignal entsprechend dem Pegel des Ausgangssignals der Steuereinheit auf seinem aktivierendem bzw. deaktivierendem Signalpegel liegt.

Verwendung z.B. zur Ansteuerung der Bremsleuchten eines Fahrzeugs.

## Beschreibung

Die Erfindung bezieht sich auf eine Steuerungsvorrichtung nach dem Oberbegriff des Anspruchs 1. Eine derartige Vorrichtung kann insbesondere zur Ansteuerung des oder der Bremsleuchten eines Fahrzeugs verwendet werden, wobei dann die wenigstens eine Bremsleuchte das ansteuerbare Element bildet, das von einer Steuereinheit in Abhängigkeit von dem an einem Bremslichtschalter erzeugten Steuerbefehlssignal angesteuert wird. Um bei Bedarf die Bremsleuchte mit unterschiedlicher Helligkeit betreiben zu können, kann als Ansteuersignal ein pulsweitenmodulierbares Taktimpulssignal vorgesehen sein. Eine solche Art der Steuerung von Fahrzeugleuchten ist beispielsweise in der Offenlegungsschrift DE 43 08 514 A1 und der Patentschrift DE 43 41 058 C1 beschrieben.

Aus der Offenlegungsschrift DE 39 30 775 A1 ist eine Vorrichtung zur Steuerung und Überwachung der Bremsleuchten eines Fahrzeugs in Abhängigkeit vorn Schaltzustand eines Bremslichtschalters bekannt, bei der das vom Bremslichtschalter erzeugte Signal einer Steuer- und Regeleinheit zugeführt wird, die in Abhängigkeit von diesem Signal einen entsprechenden elektrischen Strom zur Bremslichterzeugung in die Bremsleuchten einsteuert. Gleichzeitig wird von der Steuer- und Regeleinheit die Funktionsfähigkeit der Bremsleuchten überwacht, wofür ihr zusätzlich das Signal eines Radgeschwindigkeitssensors zugeführt wird. Bei fehlender Funktionsfähigkeit oder einer erkannten Bremsung mit offenem Bremslichtschalter oder mit nicht leuchtenden Bremsleuchten wird eine Fehlermeldung erzeugt. Die Steuer- und Regeleinheit enthält vorzugsweise zwecks Erzielung einer zuverlässigkeitserhöhenden Redundanz zwei parallel angeordnete Prozessoren, welche unter anderem die Funktionsüberwachung eines im Fahrzeug vorgesehenen Antiblockiersystems vornehmen. Damit die Versorgung der Bremsleuchten mit elektrischem Strom auch bei einem völligen Ausfall der Steuer- und Regeleinheit gewährleistet bleibt, wird vorgeschlagen, parallel zur Steuer- und Regeleinheit zwischen dem Bremslichtschalter und den Bremsleuchten einen elektrischen Strompfad mit einem Widerstand anzuordnen, der so dimensioniert ist, daß bei geschlossenem Bremslichtschalter genau dann der gesamte, zur Aktivierung der Bremsleuchten erforderliche Strom über diesen Strompfad fließt, wenn die Steuer- und Regeleinheit ausgefallen und daher der von dieser zu den Bremsleuchten führende Strompfad unterbrochen ist.

Allgemein ist es bei Steuerungsvorrichtungen, die einen Rechner beinhalten, bekannt, daß aufgrund von Software-Fehlern oder sonstigen Störungen der Rechner selbst bei Vorhandensein einer sogenannten Watchdog-Schaltung ausfallen kann, so daß die von ihm durchzuführenden Aufgaben nicht mehr korrekt ausgeführt werden, was bei sicherheitsrelevanten Funktionen zu einer gefährlichen Funktionsbeinträchtigung führen kann. Dabei ist es bekannt, den Rechner bei Absturz auf einen definierten, sicheren Zustand zu bringen, der jedoch völlig unabhängig von den Eingangssignalen ist und folglich an die gerade vorliegende Situation fehlangepaßt sein kann, beispielsweise bei einer Scheinwerfersteuerung eines Fahrzeugs ein pauschales Aktivieren des Abblendlichtes. Als zuverlässigkeitserhöhende Maßnahme ist es geläufig, die Steuerungsvorrichtung dadurch redundant auszulegen, daß zwei oder mehr parallel arbeitende, funktionell gleiche Rechnereinheiten eingesetzt werden, was einen entsprechenden Realisierungsaufwand bedingt, siehe z.B. den Zeitschriftenaufsatz S. Storandt, O. Feger, Wie macht man Prozessor- und Controller-Systeme ausfallsicherer?, Elektronik 17, 19.08.1988, Seite 72.

Der Erfindung liegt als technisches Problem die Bereitstellung einer Steuerungsvorrichtung der eingangs genannten Art zugrunde, bei der mit möglichst geringem Aufwand eine Redundanz zur Erhöhung der Zuverlässigkeit und Verfügbarkeit der Vorrichtung geschaffen ist.

Dieses Problem wird durch eine Steuerungsvorrichtung mit den Merkmalen des Anspruchs 1 gelöst. Bei dieser Vorrichtung ist eine Redundanzeinrichtung in Form einer einfachen Redundanzlogikeinheit vorgesehen, die das Steuerbefehlssignal mit dem Ausgangssignal der Steuereinheit dergestalt logisch zur Bildung des Ansteuersignals für das ansteuerbare Element verknüpft, daß bei kontinuierlich auf dem deaktivierenden Signalpegel liegendem Ausgangssignal der Steuereinheit das Ansteuersignal entsprechend dem Steuerbefehlssignal auf seinem aktivierenden bzw. deaktivierenden Signalpegel liegt, während ansonsten das Ansteuersignal in seinem Signalpegel demjenigen des Ausgangssignals der Steuereinheit folgt. Eine solche Redundanzlogikeinheit benötigt ersichtlich deutlich weniger Realisierungsaufwand als die Bereitstellung von zwei oder mehr parallelen Steuereinheiten. Es versteht sich, daß unter aktivierendem bzw. deaktivierendem Signalpegel jeweils ein solcher zu verstehen ist, der eine Aktivierung bzw. Deaktivierung des ansteuerbaren Elementes anfordert. Dabei braucht der aktivierende Signalpegel für die verschiedenen Signale kein einheitlicher Pegel sein, sondern kann z.B. für ein Signal ein niedriger und für ein anderes Signal ein hoher Pegel sein. Analoges gilt für den deaktivierenden Signalpegel.

Die Redundanzlogikeinheit erfüllt in verhältnismäßig einfacher Weise die an sie für eine Steuerungsvorrichtung der vorliegenden Art gestellten Anforderungen. Wenn die Steuereinheit funktionstüchtig ist, gibt sie dann, wenn das eingangsseitig anliegende Steuerbefehlssignal auf aktivierendem Signalpegel liegt, ein Ausgangssignal ab, das abhängig vom jeweiligen Anwendungsfall und der entsprechenden Systemauslegung kontinuierlich oder in Form eines Taktimpulssignals jedenfalls während gewisser periodischer Zeiträume auf dem aktivierenden Signalpegel liegt, der dazu führt, daß das ansteuerbare Element in einer gewünschten Weise aktiviert wird. Solange diese Situation gegeben ist, läßt die Redundanzlogikeinheit die Aktivierungs- oder Deaktivierungsanforderung dieses Ausgangssignals der Steuereinheit für das Ansteuersignal des ansteuerbaren Elementes durch. Wenn das Ausgangssignal der Steuereinheit kontinuierlich auf dem deaktivierenden Signalpegel liegt, obwohl das anfordernde Steuerbefehlssignal auf dem aktivierenden Signalpegel liegt, interpretiert die Redundanzlogikeinheit dies als Ausfall der Steuereinheit und hält in diesem Fall einen Notbetrieb des ansteuerbaren Elementes dadurch aufrecht, daß sie die jeweilige Aktivierungs- oder Deaktivierungsanforderung, wie sie im Steuerbefehlssignal enthalten ist, für das Ansteuersignal des ansteuerbaren Elementes verwendet. Beispielsweise können bei einer Steuerungsvorrichtung zur Fahrzeugbremslichtsteuerung die Bremsleuchten bei Ausfall der Steuereinheit, welche normalerweise die Bremsleuchten mit einem pulsweitenmodulierten Taktimpulssignal bei Bedarf mit variabler Helligkeit ansteuert, durch die Redundanzlogikeinheit wenigstens noch in ihren maximalen Helligkeitszustand gesteuert werden, wenn der zugehörige Bremslichtschalter geschlossen wird.

In einer Weiterbildung der Erfindung nach Anspruch 2 beinhaltet die Redundanzlogikeinheit ein RC-Glied, das auf schaltungstechnisch einfache Weise dafür sorgt, daß in dem Anwendungsfall, in welchem das Ausgangesignal der Steuereinheit ein pulsweitenmoduliertes Taktimpulssignal ist, die Zeiträume, in denen dieses Ausgangssignal nicht auf dem aktivierenden, sondern auf dem deaktivierenden Signalpegel liegt, nicht schon als ein Ausfall der Steuereinheit interpretiert werden. Auf einen solchen Ausfall schließt die Redundanzlogikeinheit vielmehr erst dann, wenn das Ausgangssignal der Steuereinheit bei auf aktivierendem Signalpegel liegendem Steuerbefehlssignal merklich länger als diese Austastzeit auf dem deaktivierenden Signalpegel verbleibt, wobei die für die Ausfallerkennung relevante Zeitdauer von der Entladezeitkonstante des RC-Gliedes bestimmt ist.

Eine Weiterbildung der Erfindung nach Anspruch 3 realisiert eine Steuerungsvorrichtung zur Fahrzeugbremslichtsteuerung mit geringem schaltungstechnischem Aufwand.

Eine bevorzugte Ausführungform der Erfindung ist in den Zeichnungen dargestellt und wird nachfolgend beschrieben. Hierbei zeigen:
- Fig. 1: ein schematisches Blockschaltbild einer Vorrichtung zur Steuerung der Bremsleuchten eines Fahrzeugs,
- Fig. 2: ein genaueres Schaltbild eines Teils einer in Fig. 1 verwendeten Redundanzlogikeinheit und
- Fig. 3: ein detaillierteres Schaltbild der Vorrichtung nach den Fig. 1 und 2.

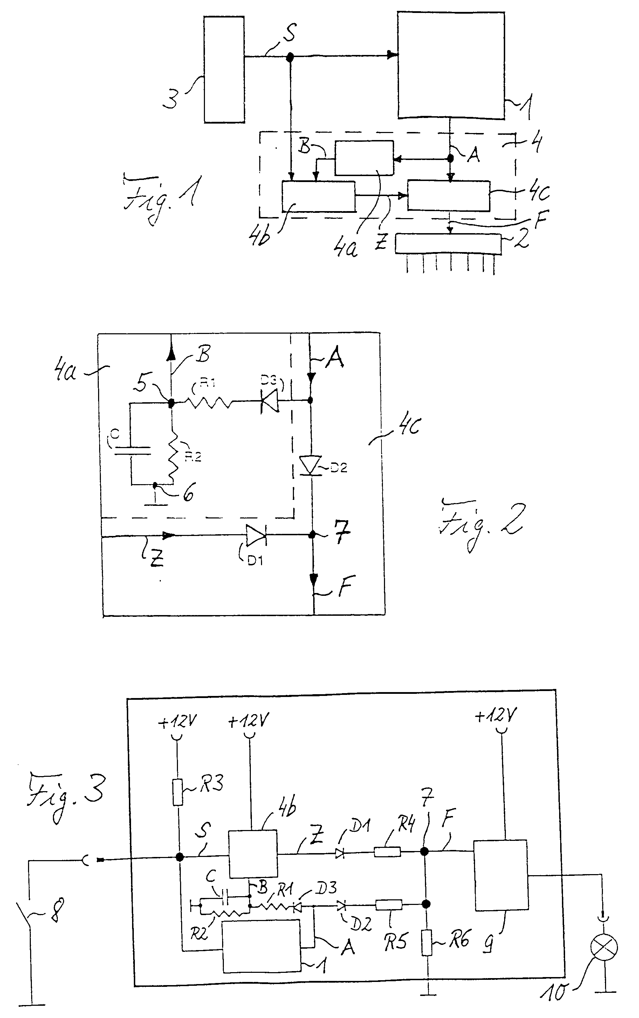

Fig. 1 zeigt eine Steuerungvorrichtung zur Fahrzeugsbremslichtsteuerung in einem schematischen Blockschaltbild. Die Vorrichtung umfaßt einen Rechner (1), eine Ausgangseinheit (2), eine Eingangseinheit (3) und eine Redundanzlogikeinheit (4). Über die Eingangseinheit (3) empfängt die Vorrichtung ein Steuerbefehlssignal (S), das von einem in Fig. 1 nicht dargestellten Bremslichtschalter als binär codiertes, den Schaltzustand dieses Schalters anzeigendes Signal erzeugt wird. Wenn der Rechner (1) in Betrieb und funktionstüchtig ist, generiert er ein binär codiertes Ausgangssignal (A) in Abhängigkeit von dem eingangsseitig zugeführten Steuerbefehlssignal (S). Genauer gesagt liegt dieses Ausgangssignal (A) kontinuierlich auf einem deaktivierenden, beispielsweise niedrigen Signalpegel, wenn der Bremslichtschalter geöffnet ist und damit auch das eingangsseitig anliegende Steuerbefehlssignal (S) auf einem deaktivierenden, beispielsweise einem hohen Signalpegel liegt, mit dem der ausgeschaltete Zustand der über die Ausgangseinheit (2) ansteuerbaren Bremsleuchten angefordert wird. Wenn hingegen der Bremslichtschalter geschlossen ist und somit das Steuerbefehlssignal (S) auf einem aktivierenden Signalpegel, beispielsweise einem niedrigen Pegel, liegt, erzeugt der Rechner (1) als das Ausgangssignal (A) ein Signal, das je nach anwendungsfallabhängiger Systemauslegung in Abhängigkeit von weiteren Parametern kontinuierlich auf seinem aktivierenden Signalpegel, beispielsweise einem hohen Pegel, liegt, oder ein pulsweitenmoduliertes Taktimpulssigal ist, dessen Signalpegel zwischen dem aktivierendem und dem deaktivierenden Pegel wechselt.

Die letztgenannte Maßnahme kann dazu dienen, die Bremsleuchten mit variabler Helligkeit ansteuern zu können, wobei die Helligkeit vom Austastverhältnis des Taktimpulssignals abhängt. Eine solche gedimmte Ansteuerung der Bremsleuchten kann vom Rechner (1) bei Bedarf auch unabhängig vom Steuerbefehlssignal (S) des Bremslichtschalters zum Zwecke der Bereitstellung einer Ersatzschaltung bei Ausfall einer anderen Fahrzeugleuchte vorgesehen sein. Beispielsweise kann vorgesehen sein, bei einem vom Rechner (1) erkannten Ausfall des Fahrzeugrücklichtes, das z.B. eine Leistung von 10W besitzt, als Ersatz die beiden Fahrzeugbremsleuchten, die z.B. eine Leistung von jeweils 21W besitzen, mit jeweils 5W mittels eines entsprechenden pulsweitenmodulierten Taktimpulssignals gedimmt zu aktivieren. Es versteht sich, daß der Rechner (1) in nicht gezeigter, üblicher Weise zur Erfüllung weiterer Steuerungsfunktionen, insbesondere zur Steuerung weiterer Fahrzeuglampen, eingerichtet sein kann. Die Redundanzlogikeinheit (4) dient dazu, mit geringem Aufwand die Aktivierung der Bremsleuchten bei geschlossenem Bremslichtschalter auch dann zu gewährleisten, wenn der Rechner (1) ausfällt, der in diesem Fall unabhängig vom eingangsseitig anstehenden Steuerbefehlssignal (S) und anderer Fahrzeugzustandsparameter als bremslichtrelevantes Ausgangssignal (A) ein kontinuierlich auf dem deaktivierenden Signalpegel liegendes Signal abgibt.

Die Redundanzlogikeinheit (4) setzt sich zu diesem Zweck aus drei Schaltungskomponenten zusammen, und zwar einer Austastüberbrückungseinheit (4a), einer ersten Verknüpfungslogikeinheit (4b) und einer zweiten Verknüpfungslogikeinheit (4c), wobei die erstgenannte (4a) und die letztgenannte Komponente (4c) in der in Fig. 2 detaillierter dargestellten Weise schaltungstechnisch miteinander verbunden sind. Wie aus den Fig. 1 und 2 hervorgeht, ist das Rechnerausgangsignal (A) einerseits der zweiten Verknüpfungslogikeinheit (4c) und andererseits der Austastüberbrückungseinheit (4a) zugeführt. Letztere weist in Serie eine Diode (D3) und einen Widerstand (R1) auf, über die das eingangsseitig anstehende Rechnerausgangssignal (A) einem Anschlußknoten (5) eines anschließenden RC-Gliedes zugeführt wird, das einen Kondensator (C) und einen Widerstand (R2) parallel zwischen diesem Anschlußknoten (5) und einem Masseanschlußknoten (6) beinhaltet. Das am Anschlußknoten (5) anstehende Signal (B) bildet das Ausgangssignal der Austastüberbrückungseinheit (4a), das der ersten Verknüpfungseinheit (4b) zugeführt wird, der außerdem das Steuerbefehlssignal (S) parallel zum Rechner (1) zugeführt wird.

Die Austastüberbrückungeinheit (4a) dient dazu, in den Fällen, in denen der Rechner (1) ein pulsweitenmoduliertes Taktimpulssignal als das Ausgangssignal (A) abgibt, zu verhindern, daß die Redundanzlogikeinheit (4) in den Zeitperioden, in denen dieses Taktimpulssignal auf dem deaktivierenden Signalpegel liegt, fälschlicherweise auf einen Rechnerausfall schließt. Dazu sind die Bauteile der Austastüberbrückungseinheit (4a) geeignet so dimensioniert, daß ihr Ausgangssignal (B) rasch auf einen Wechsel des Rechnerausgangssignals (A) auf den aktivierenden Signalpegel und nur um mindestens die maximale Austastzeitdauer verzögert auf einen Wechsel desselben vom aktivierenden auf den deaktivierenden Signalpegel reagiert. Wenn, um ein konkretes Beispiel zu nennen, der aktivierende Signalpegel des Rechnerausgangssignals (A) ein hoher Pegel und der deaktivierende Signalpegel ein niedriger Pegel sind, ist die Austastüberbrückungseinheit (4a) so dimensioniert, daß der Kondensator (C) bei Wechsel des Rechnerausgangssignals (A) auf den hohen Signalpegel über die Serienschaltung aus Diode (D3) und Widerstand (R1) rasch aufgeladen wird, während er sich nach anschließendem Wechsel des Rechnerausgangssignals auf den niedrigen Signalpegel nur so langsam über den Widerstand (R2) des RC-Gliedes entlädt, daß das am Anschlußknoten (5) anstehende Ausgangssignal (B) während der Austastperiode des Rechnerausgangsignals im wesentlichen konstant auf dem hohen, aktivierenden Signalpegel verbleibt. Auf diese Weise sind in dem Ausgangssignal (B) der Austastüberbrückungseinheit (4a) die Austastzeitperioden des Rechnerausgangssignals (A) überbrückt. Wenn hingegen das Rechnerausgangssignal (A) kontinuierlich auf hohem oder niedrigem Signalpegel liegt, so nimmt das Ausgangssignal (B) der Austastüberbrückungseinheit (4a) den Signalpegel des Rechnerausgangssignals (A) an.

Die erste Verknüpfungslogikeinheit (4b) verknüpft das Ausgangssignal der Austastüberbrückungseinheit (4a) mit dem Steuerbefehlssignal (S) mittels einer einfachen logischen Verknüpfung, z.B. einer logischen UND-Verknüpfung des Inversen des Ausgangsignals (B) der Austastüberbrückungseinheit (4a) mit dem Inversen des Steuerbefehlsignals (S), zu einem Zwischensignal (Z), das sie der zweiten Verknüpfungslogikeinheit (4c) zuführt. Die zweite Verknüpfungslogikeinheit (4c) ist als verdrahtete ODER-Verknüpfung in Form zweier ausgangsseitig zu einem Ausgangsknoten (7) zusammengeführter Dioden (D1, D2) gebildet, wobei der einen Diode (D1) das Zwischensignal (Z) von der ersten Verknüpfungslogikeinheit (4b) und der anderen Diode (D2) das Rechnerausgangssignal (A) zugeführt sind. Die zweite Verknüpfungslogikeinheit (4c) gibt an ihrem Ausgangsknoten (7) ein Ansteuersignal (F) ab, das als maßgebliches Signal zur Bremsleuchtenansteuerung der Ausgangseinheit (2) zugeführt wird.

Insgesamt ergibt sich durch die beschriebene Auslegung der Redundanzlogikeinheit (4), daß bei auf aktivierendem Signalpegel liegendem Steuerbefehlssignal (S) immer dann, wenn das Rechnerausgangssignal (A) kontinuierlich oder in Form eines Taktimpulssignals wenigstens zeitweise periodisch auf dem aktivierenden Signalpegel liegt, das Ansteuersignal (F) für die Bremsleuchten diesem Rechnerausgangssignal (A) entspricht, während es ansonsten, d.h. bei ausgefallenem Rechner (1) und daher kontinuierlich auf deaktivierendem Signalpegel liegendem Rechnerausgangssignal (A) dem aktivierenden bzw. deaktivierenden Zustand des vom Bremslichtschalter erzeugten Steuerbefehlsignals (S) entspricht. Im letztgenannten Notbetriebsfall hält daher die Redundanzlogikeinheit (4) bei erkanntem Rechnerausfall (1) in einer schaltungstechnisch einfachen Weise eine direkte Bremslichtsteuerung entsprechend der Betätigung des Bremslichtschalters aufrecht.

Fig. 3 zeigt eine konkrete schaltungstechnische Realisierung der gesamten Steuerungsvorrichtung zur Fahrzeugbremslichtsteuerung nach den Fig. 1 und 2, wobei funktionell entsprechende Elemente mit den gleichen Bezugszeichen versehen sind. Wie aus Fig. 3 ersichtlich, beinhaltet die Vorrichtung einen Bremslichtschalter (8), der im geöffneten Zustand ein auf einem hohen Signalpegel von +12V liegendes, deaktivierendes und im geschlossenen Zustand ein auf einem niedrigen Signalpegel von 0V liegendes, aktivierendes Steuerbefehlssignal erzeugt. Der hohe Signalpegel wird dabei über eine +12V-Spannungsversorgung und einen Vorwiderstand (R3) bereitgestellt. Die ebenfalls an die Spannungsversorgung angeschlossene erste Verknüpfungslogikeinheit (4b) der Redundanzlogikeinheit nimmt ein UND-Verknüpfung des Inversen des eingehenden Steuerbefehlsignals (S) mit dem Inversen des von der Austastüberbrückungseinheit bereitgestellten Ausgangssignals (B) zur Erzeugung des Zwischensignals (Z) vor. Über die eine Diode (D1) und einen Widerstand (R4) wird das Zwischensignal (Z) innerhalb der zweiten Verknüpfungslogikeinheit mit dem über deren andere Diode (D2) und einen weiteren Widerstand (R5) geleiteten Ausgangssignal (A) des Rechners (1) an dem Ausgangsknoten (7) ODER-verknüpft, wobei dieser Ausgangsknoten (7) über einen weiteren Widerstand (R6) mit dem Masseanschluß Verbindung hat. Das an diesem Ausgangsknoten (7) der Redundanzlogikeinheit anstehende Ansteuersignal (F) ist einer Leuchtentreibereinheit (9) zugeführt, die ebenfalls an die +12V-Spannungsversorgung angeschlossen ist und die Bremsleuchten, von denen eine (10) stellvertretend gezeigt ist, in Abhängigkeit von diesem Ansteuersignal (F) ansteuert. Genauer gesagt bringt die Treibereinheit (9) die Bremsleuchten (10) in ihren leuchtenden Zustand, wenn das Ansteuersignal (F) auf dem aktivierenden, hohen Signalpegel liegt, während sie die Bremsleuchten (10) in denjenigen Betriebsphasen, in denen das Ansteuersignal (F) auf dem deaktivierenden, niedrigen Signalpegel liegt, in ihrem nichtleuchtenden Zustand hält.

Es versteht sich, daß sich erfindungsgemäße Steuerungsvorrichtungen nicht nur, wie beschrieben, zur rechnerausfallgesicherten, redundanten Steuerung von Fahrzeugbremsleuchten, sondern selbstverständlich auch von anderen Lampen eines Fahrzeugs sowie für alle Anwendungsfälle auch außerhalb des Gebietes der Fahrzeugtechnik eignen, bei denen ein ansteuerbares Element normalerweise von einem Rechner mittels kontinuierlichen oder Taktimpulssignalen angesteuert wird. Mit einer solchen Vorrichtung kann dieses Element in einem Notbetrieb bei Rechnerausfall direkt entsprechend einem eingangsseitig anliegenden Steuerbefehlsignal angesteuert werden. Wenn das Rechnerausgangssignal keine Taktimpulssignale, sondern lediglich kontinuierliche Steuersignale beinhaltet, kann in der beschriebenen Redundanzlogikeinheit (4) die Austastüberbrückungseinheit (4a) weggelassen werden.

## Patentansprüche

1. Steuerungsvorrichtung, insbesondere zur Fahrzeugbremslichtsteuerung mit
- einer Steuereinheit (1), die zur Steuerung eines ansteuerbaren Elementes (10) ein Ausgangssignal (A) abgibt, das dann, wenn ein eingangsseitig anstehendes Steuerbefehlssignal (S) auf einem aktivierenden Signalpegel liegt, kontinuierlich oder periodisch einen aktivierenden Signalpegel annimmt und dann, wenn das Steuerbefehlssignal auf einem deaktivierenden Signalpegel liegt oder ein Funktionsausfall der Steuereinheit vorliegt, einen deaktivierenden Signalpegel annimmt,
**gekennzeichnet durch**
- eine Redundanzlogikeinheit (4), die das Steuerbefehlssignal (S) mit dem Ausgangssignal (A) der Steuereinheit (1) dergestalt logisch zur Bildung des Ansteuersignals (F) für das ansteuerbare Element (10) verknüpft, daß dann, wenn das Ausgangssignal (A) der Steuereinheit (1) kontinuierlich auf seinem deaktivierenden Signalpegel liegt, das Ansteuersignal (F) bei auf seinem aktivierenden Signalpegel liegendem Steuerbefehlsignal (S) auf seinem aktivierenden Pegel und bei auf seinem deaktivierenden Signalpegel liegendem Steuerbefehlsignal auf seinem deaktivierenden Pegel liegt, während ansonsten das Ansteuersignal (F) entsprechend dem Ausgangssignal (A) der Steuereinheit (1) auf seinem aktivierenden bzw. deaktivierenden Signalpegel liegt.

2. Steuerungsvorrichtung nach Anspruch 1, weiter
**dadurch gekennzeichnet, daß**
die Redundanzlogikeinheit (4) eine Austastüberbrückungseinheit (4a) mit einem RC-Glied (R2, C) aufweist, die das Ausgangssignal (A) der Steuereinheit (1) in ein Signal (B) umwandelt, das dem Pegel des Ausgangssignals (A) der Steuereinheit (1) mit der Ausnahme folgt, daß es in Zeitphasen, in denen das Ausgangssignal der Steuereinheit lediglich temporär auf seinem deaktivierendem Signalpegel liegt, auf seinem aktivierenden Signalpegel verbleibt.

3. Steuerungsvorrichtung zur Fahrzeugsbremslichtsteuerung nach Anspruch 2, weiter
**dadurch gekennzeichnet, daß**
- ein Bremslichtschalter (8) vorgesehen ist, der das Steuerbefehlssignal (S) erzeugt,
- die Steuereinheit ein Rechner (1) ist, der unter vorgegebenen Bedingungen ein pulsweitenmoduliertes Ausgangssignal (A) zur Bremslichtsteuerung abzugeben vermag und
- die Redundanzlogikeinheit (4) eine erste Verknüpfungslogikeinheit (4b), welche das Ausgangssignal (B) der Austastüberbrückungseinheit (4a) mit dem Steuerbefehlssignal (S) logisch verknüpft, und eine zweite Verknüpfungslogikeinheit (4c) zur logischen Verknüpfung des von der ersten Verknüpfungslogikeinheit erzeugten Ausgangssignals (Z) mit dem Rechnerausgangssignal (A) zwecks Bereitstellung des Bremsleuchtenansteuersignals (F) aufweist.
